# EUROPÄISCHE PATENTSCHRIFT

(11) **EP 1 304 512 B1**
(45) Veröffentlichungstag und Bekanntmachung des Hinweises auf die Patenterteilung: **07.12.2005**
(21) Anmeldenummer: 02023355.7
(22) Anmeldetag: 18.10.2002
(51) Int. Cl.: F16H 63/32

(54) **Verschleissfeste Schaltgabel**
Wear resistant shift fork
Fourchette de boite de vitesses ayant une résistance à l'usure

(30) Priorität: 18.10.2001 DE 10151605
(43) Veröffentlichungstag der Anmeldung: 23.04.2003
(73) Patentinhaber: Euroflamm GmbH, 28719 Bremen (DE)
(72) Erfinder: Köster, Dietmar, 27711 Osterholz-Scharmbeck (DE); Schueler, Eric A., Maineville, Ohio 45039 (US); Nels, Terry, Xenia, Ohio 45385 (US)
(74) Vertreter: Hemmer, Arnd

(56) Entgegenhaltungen:
- PATENT ABSTRACTS OF JAPAN vol. 018, no. 607 (M-1707), 18. November 1994 (1994-11-18) & JP 06 229474 A (NTN CORP), 16. August 1994 (1994-08-16)
- PATENT ABSTRACTS OF JAPAN vol. 016, no. 290 (M-1272), 26. Juni 1992 (1992-06-26) & JP 04 078374 A (TOYOTA MOTOR CORP;OTHERS: 01), 12. März 1992 (1992-03-12)
- PATENT ABSTRACTS OF JAPAN vol. 014, no. 473 (M-1035), 16. Oktober 1990 (1990-10-16) & JP 02 190672 A (TOYOTA MOTOR CORP), 26. Juli 1990 (1990-07-26)
- PATENT ABSTRACTS OF JAPAN vol. 013, no. 517 (P-962), 20. November 1989 (1989-11-20) & JP 01 211010 A (TOYOTA MOTOR CORP), 24. August 1989 (1989-08-24)

## Beschreibung

Die Erfindung betrifft eine Schaltgabel.

Gleitelemente sind überall dort erforderlich, wo bewegliche oder bewegte Teile gleitend miteinander in Eingriff sind. Dies ist auch bei Schaltgabeln in Schaltgetrieben, insbesondere für Kraftfahrzeuge der Fall. Die Schaltgabeln greifen in entsprechende Ringnuten an den Schaltmuffen des Getriebes ein, um diese zum Gangwechsel zu verschieben. Dabei kommt es zwischen der feststehenden Schaltgabel und der rotierenden Schaltmuffe zu einem Gleiteingriff. Es tritt dabei eine Gleitreibung an der Oberfläche der Schaltgabel auf, so dass diese einem erhöhten Verschleiß unterworfen ist. Aus diesem Grunde wurden bislang die Schaltgabeln beschichtet, um eine bessere Verschleißfestigkeit zu erreichen. Die Schaltgabeln werden meist aus Stahlblech, Stahlguss, Messing, Aluminium oder einem anderen Leichtmetall gefertigt und anschließend mit Molybdän, Chrom, Polyamid oder einem Polyimid beschichtet, um eine erhöhte Verschleißfestigkeit zu erreichen. Das Aufbringen dieser Beschichtungen, beispielsweise durch Spritzen, ist aufwendig. Ferner werden bei modernen Kraftfahrzeuggetrieben, beispielsweise automatisierte Schaltgetriebe, sequentielle Schaltgetriebe und Doppelkupplungsgetriebe, möglichst kurze Schaltzeiten für die Gangwechsel gefordert. Kürzere Schaltzeiten erfordern größere Axialkräfte im Getriebe, welche zu höheren Flächenpressungen an den Gleitelementen wie den Schaltgabeln führen. Dies führt zu einem erhöhten Verschleiß dieser Elemente.

JP 06 229 474 A offenbart eine Schaltgabelklaue, welche aus einem thermoplastischen Material gefertigt ist, welches gebundenen Kohlenstoff in Form von Graphit enthält. Die Verwendung von Graphit in einer Schaltgabel ist problematisch, da Graphit leicht zu unerwünschten Verunreinigungen des Getriebeöls führen kann.

JP 04 078 374 offenbart eine Schaltgabel, welche mit Kohlenstofffasern verstärkt ist und aus gesintertem Kohlenstoff besteht. Eine solche Schaltgabel ist teuer in der Herstellung, da die gesamte Schaltgabel aus dem Kohlenstoffmaterial gefertigt werden muss.

JP 02 190 672 und JP 01 121 010 offenbaren Beschichtungen der Gleitfläche einer Schaltgabel mit einem Harz, in welches Kohlenstofffasern eingebettet sind. Auch hier besteht der Nachteil darin, dass die Kohlenstofffasern recht teuer sind. Ferner ist es wünschenswert, die Verschleißfestigkeit von derartigen Gleitelementen weiter zu verbessern.

Es ist daher Aufgabe der Erfindung, eine Schaltgabel zu schaffen, welche verbesserte Verschleißeigenschaften aufweist und kostengünstig herzustellen ist.

Diese Aufgabe wird durch eine Schaltgabel mit den im Anspruch 1 angegebenen Merkmalen gelöst. Bevorzugte Ausführungsformen ergeben sich aus den Unteransprüchen.

Bei der erfindungsgemäßen Schaltgabel, welche ein Gleitelement darstellt, wird zumindest in einem Gleitabschnitt, d. h. in dem Abschnitt, welcher in gleitenden Eingriff mit einem relativ bewegten Bauteil kommt, eine Oberflächenstruktur aus Kohlenstoff verwendet. Eine Oberflächenstruktur aus Kohlenstoff weist eine wesentlich höhere Verschleißfestigkeit auf als die bislang verwendeten Beschichtungen. Um die erforderlichen Gleiteigenschaften zu erreichen, ist die Kohlenstoffstruktur bzw. das Kohlenstoffmaterial vorzugsweise verdichtet, wobei bevorzugt eine Oberflächenrauheit von Rz ≤ 30 Mikrometer, vorzugsweise ≤ 25 Mikrometer erreicht werden kann. Die Oberflächenstruktur weist jedoch vorzugsweise eine Restporosität auf. Diese Restporosität bewirkt, dass die Oberfläche eine Ölspeicherkapazität aufweist, welche auch bei Ölmangel bzw. unzureichender Ölzufuhr eine ausreichende hydrodynamische Schmierung gewährleistet.

Die Schaltgabel, welche insbesondere als Schaltgabel für ein Kraftfahrzeuggetriebe ausgebildet ist, weist ein Trägerelement auf, welches zumindest in einem Eingriffsabschnitt mit einer Oberflächenstruktur aus Kohlenstoff versehen ist. Das Trägerelement kann in bekannter Weise vorzugsweise aus Stahl, Messing, Aluminium oder einem anderen geeigneten Material gefertigt werden. Die Oberflächenstruktur aus Kohlenstoff wird zumindest in einem Eingriffsabschnitt, d. h. in einem Bereich der Schaltgabel, welcher mit einem rotierenden Bauteil des Getriebes, vorzugsweise einer Schaltmuffe in gleitenden Eingriff tritt, angebracht.

Bevorzugt ist die Oberflächenstruktur als Oberflächenschicht aus Kohlenstoff ausgebildet. Die Oberflächenschicht ist zumindest in dem Gleitabschnitt bzw. Eingriffsabschnitt aufgebracht. Der Gleitabschnitt bzw. Eingriffsabschnitt ist derjenige Bereich des Gleitelementes bzw. der Schaltgabel, welcher in Eingriff mit einem relativ bewegten Bauteil, beispielsweise einer Schaltmuffe tritt. Diese Bereiche unterliegen aufgrund des gleitenden Eingriffs einer erhöhten Belastung und müssen eine besondere Verschleißfestigkeit aufweisen. Die Oberflächenschicht aus Kohlenstoff wird vorzugsweise als eine Beschichtung auf das Trägerelement an den entsprechenden Stellen aufgebracht.

Vorzugsweise ist die Oberflächenschicht mit dem Trägerelement verklebt. Dies kann durch einen geeigneten Metallkleber geschehen. Beispielsweise wird die Oberflächenschicht aus Kohlenstoff bzw. die Karbonschicht mit einem Nitrilphenolharzklebstoff auflaminiert. Doch auch andere bekannte Klebstoffe wie beispielsweise Epoxidharzklebstoffe oder Klebstoffe auf Polyacrylbasis sind geeignet, die Oberflächenschicht mit dem Trägerelement zu verbinden.

Weiter bevorzugt kann zwischen dem Trägerelement und der Oberflächenschicht aus Kohlenstoff eine Verbindungsschicht, vorzugsweise aus einem Aramidgewebe angeordnet sein. Dies gewährleistet eine höhere Festigkeit der Verbindung zwischen Oberflächenschicht und Trägerelement.

Die Oberflächenstruktur enthält Kohlenstoffpartikel. Die Kohlenstoffpartikel sind in ein Harzmaterial, insbesondere ein Phenolharz eingebettet. Anstelle eines Phenolharzes kann auch ein anderes geeignetes Bindemittel oder Harz, beispielsweise ein Epoxidharz verwendet werden. Besonders bevorzugt wird ein Material aus Kohlenstoffpartikeln verwendet, wie es für einen Reibbelag in US 4,639,392 offenbart ist. Das dort offenbarte Material beinhaltet Kohlenstoffpartikel von sphärischer Form. Es handelt sich dabei um petrolkoksbasierten Kohlenstoff oder Rußpartikel. Als Bindemittel werden ein Phenolpulver und insbesondere ein epoxidmodifiziertes Phenol eingesetzt. Die Kohlenstoffpartikel und das Phenolpulver werden vorzugsweise in einem Gewichtsverhältnis von 60 bis 85% Kohlenstoff und 15 bis 40% Phenol gemischt. Die Mischung wird erhitzt und vorzugsweise unter einem Druck von 2 bis 7 MPa verdichtet. Das angewendete Verfahren entspricht dabei den in US 4,639,392 offenbarten Verfahren. Die Verwendung von Kohlenstoffpartikeln hat gegenüber der Verwendung von Kohlenstofffasern den Vorteil, dass sich Kohlenstoffpartikel wesentlich kostengünstiger erzeugen lassen. Die Herstellung und das anschließende Verweben von Kohlenstofffasern sind sehr aufwändig und teuer. Kohlenstoffpartikel jedoch fallen sehr kostengünstig als Abfallstoffe, beispielsweise in Form von Ruß oder Kohlenstaub, in verschiedenen Prozessen an. Folglich kann ein Gleitbelag aus Kohlenstoffpartikeln wesentlich kostengünstiger hergestellt werden. Darüber hinaus weisen Kohlenstoffpartikel einen höheren Dissipationsgrad auf, da sie gegenüber Kohlenstofffasern eine größere Wärmeaufnahme ermöglichen. Dies ermöglicht eine vollständige Umwandlung der Reibungsenergie in Wärme, wodurch der Verschleiß des Gleitelementes minimiert wird.

Der Eingriffsabschnitt kann vorzugsweise als Einsatz ausgebildet sein, welcher mit dem Trägerelement verbunden ist. Dies bedeutet, das Trägerelement der Schaltgabel wird nicht direkt beschichtet bzw. mit der Oberflächenschicht aus Kohlenstoff versehen. Stattdessen wird ein entsprechend beschichteter Einsatz oder ein Einsatz mit einer entsprechenden Oberflächenstruktur aus Kohlenstoff in die Schaltgabel eingesetzt. Der Einsatz kann in bekannter Weise mit dem Trägerelement beispielsweise durch Verschrauben, Verklemmen oder Verspannen verbunden werden. Diese Anordnung ermöglicht eine kostengünstigere Fertigung, da nicht direkt die Schaltgabeln beschichtet werden müssen. Auch bei anderen Gleitelementen können die Gleitabschnitte als Einsätze mit einer Oberflächenstruktur aus Kohlenstoff ausgebildet werden. Bevorzugt ist der Einsatz lösbar mit dem Trägerelement verbunden. Dies ermöglicht, den Einsatz separat als Verschleißteil auszutauschen.

Der Einsatz kann eine Oberflächenschicht bzw. eine Beschichtung aus Kohlenstoff bzw. Karbon aufweisen. Alternativ kann der Einsatz auch vollständig aus einer Kohlenstoffstruktur gefertigt werden, so dass eine Beschichtung nicht erforderlich ist.

Besonders geeignet ist eine Kohlenstoffstruktur, welche Kohlenstoffpartikel beinhaltet. Die Kohlenstoffpartikel sind durch ein Bindemittel gebunden. Als Bindemittel ist insbesondere Phenolharz geeignet, jedoch können auch andere Bindemittel wie zum Beispiel Epoxidharz verwendet werden. Die verwendeten Kohlenstoffpartikel entsprechen den oben beschriebenen aus US 4,639,392 bekannten Kohlenstoffpartikeln und deren Verwendung.

Zweckmäßigerweise wird die Kohlenstoffstruktur verdichtet, um eine möglichst glatte Oberfläche mit guten Gleiteigenschaften zu erhalten. Dabei behält die Kohlenstoffstruktur jedoch vorzugsweise eine bestimmte Restporosität. Diese Restporosität bewirkt, dass die Kohlenstoffstruktur eine gewisse Ölspeicherkapazität aufweist. Aufgrund des gespeicherten Öls kann die Kohlenstoffstruktur auch bei unzureichender oder fehlender Schmierölzufuhr Notlaufeigenschaften gewährleisten, ohne dass es zu einer Beschädigung des Gleitbelages kommt. Das in den Poren der Kohlenstoffstruktur gespeicherte Öl baut einen hydrodynamischen Schmierfilm auf der Oberfläche der Kohlenstoffstruktur auf.

Nachfolgend wird die Erfindung beispielhaft anhand der beiliegenden Zeichnungen beschrieben. In diesen zeigt:
- Fig.1: eine schematische Ansicht einer Schaltgabel gemäß der Erfindung,
- Fig. 2: einen Ausschnitt einer Schaltgabel mit einem Einsatz mit einer Oberflächenschicht aus Kohlenstoff,
- Fig.3: eine Detailansicht der Schaltgabel gemäß einer ersten Ausführungsform,
- Fig. 4: eine Detailansicht der Schaltgabel gemäß einer zweiten Ausführungsform,
- Fig. 5: eine Detailansicht der Schaltgabel gemäß einer dritten Ausführungsform,
- Fig. 6: eine Detailansicht mit einer speziellen Ausgestaltung der Oberflächenschicht und
- Fig. 7: eine weitere Detailansicht einer speziellen Ausgestaltung der Oberflächenschicht.

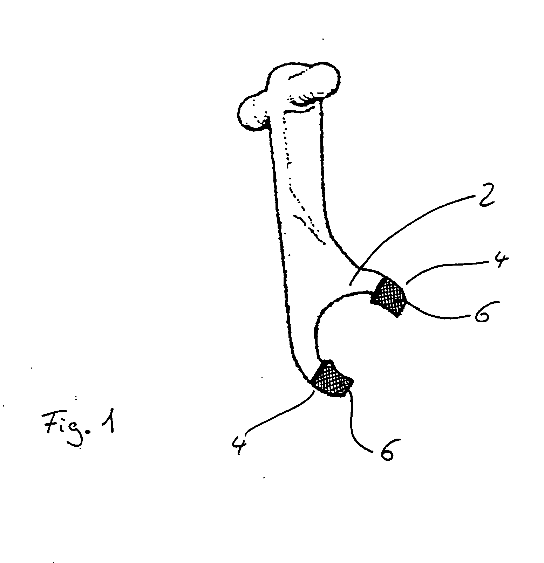

Fig. 1 zeigt schematisch eine Ansicht einer Schaltgabel gemäß der Erfindung. Die Schaltgabel weist ein Trägerelement 2 auf. Das Trägerelement 2 ist im Wesentlichen in bekannter Weise beispielsweise aus Stahlblech, Leichtmetall wie Aluminium oder einem anderen geeigneten Material ausgebildet. Das Trägerelement 2 ist zumindest in einem Endbereich im Wesentlichen U-förmig ausgebildet. Die beiden Enden 4 der freien Schenkel bilden Eingriffsabschnitte, welche in entsprechende Ringnuten an einer Schaltmuffe eines Kraftfahrzeuggetriebes gleitend eingreifen können, um die Schaltmuffe zum Gangwechsel zu verschieben. Zumindest im Bereich der Eingriffsabschnitte 4, d. h. in den Bereichen, welche in gleitenden Eingriff treten, ist eine Oberflächenschicht 6 bzw. Beschichtung aus Kohlenstoff angebracht. Die Oberflächenschicht 6 aus Kohlenstoff besteht aus Kohlenstoffpartikeln, welche in Phenolharz oder einem anderen geeigneten Harz eingebettet sind. Es werden Kohlenstoffpartikel verwendet, da diese sehr billig sind und gegenüber Kohlenstofffasern einen größeren Dissipationsgrad aufweisen. Die Oberflächenschicht 6 aus Kohlenstoff wird vorzugsweise als dünne Platte bzw. Folie ausgebildet. Das Material wird bei der Herstellung verdichtet, um eine möglichst glatte Oberfläche mit einer Oberflächenrauheit von Rz ≤ 30, vorzugsweise Rz ≤ 25 oder 20 Mikrometer aufzuweisen. Dabei wird aber eine gewisse Restporosität aufrechterhalten, um Ölspeichereigenschaften der Oberflächenschicht 6 zu gewährleisten. Diese Ölspeichereigenschaften stellen eine ausreichende Notlaufeigenschaft auch bei mangelnder oder fehlender Schmierölzufuhr sicher. Aus dieser Oberflächenschicht 6 bzw. Folie aus Kohlenstoff werden entsprechende Teile ausgestanzt oder -geschnitten, welche auf das Trägerelement 2 aufgeklebt werden. Für den Klebevorgang wird das Trägerelement entsprechend vorbehandelt und dessen Oberfläche aktiviert. Beispielsweise wird das Trägerelement entfettet, aufgeraut und/oder phosphatiert. Als Klebstoff eignet sich ein Metallklebstoff, beispielsweise ein . Nitrilphenolharzkleber.

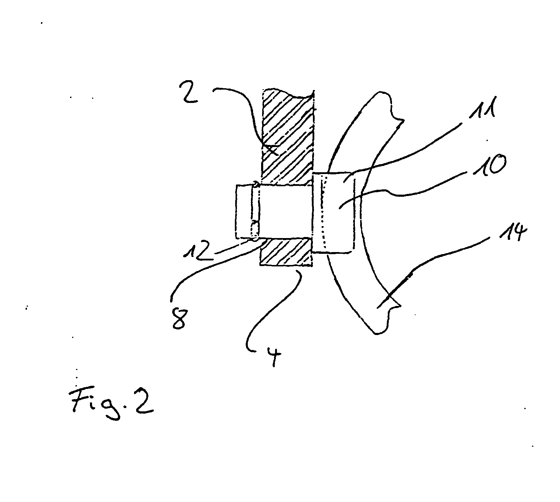

Fig. 2 zeigt eine Ausschnittansicht im Querschnitt einer alternativen Ausführungsform der Erfindung. Bei dieser Ausführungsform ist das Eingriffsende 4 des Trägerelementes 2 nicht direkt beschichtet. Stattdessen weist das Trägerelement 2 im Bereich des Eingriffsendes 4 ein Durchgangsloch 8 auf, in das ein Einsatz 10 eingesetzt ist. Der Einsatz 10 weist einen gegenüber der Bohrung vergrößerten Kopf 11 auf und wird an der entgegengesetzten Seite des Trägerelementes 2 beispielsweise durch einen Sicherungsring 12 an dem Trägerelement 2 fixiert. Der Einsatz 10 besteht vorzugsweise aus einem geeigneten Trägermaterial, wie Stahl, Messing, Aluminium oder einem anderen geeigneten Leichtmetall und ist in der oben beschriebenen Weise mit einer Oberflächenschicht aus Kohlenstoff versehen. Diese Oberflächenschicht wird insbesondere auf die Seiten des Kopfes 11 aufgebracht, welche mit der Schaltmuffe eines Getriebes in gleitenden Eingriff treten. In Fig. 2 sind dies die Seitenflächen, welche sich parallel zur Zeichnungsebene strecken. Dies ermöglicht, den Einsatz 10 als separates Verschleißteil auszubilden. Ferner muss nicht die gesamte Schaltgabel dem Beschichtungsprozess unterzogen werden. Alternativ kann der gesamte Einsatz 10 aus einem geeigneten Kohlenstoffmaterial gefertigt werden. Der Einsatz 10 kann mit seinem Kopf 11 in eine Ringnut 14 einer Schaltmuffe eines Schaltgetriebes eingreifen. Die Ringnut 14 ist in Fig. 2 lediglich schematisch dargestellt. Ferner zeigt Fig. 2 nur eine Seite der U-förmigen Schaltgabel. Die gegenüberliegende Seite, d. h. der andere freie Schenkel des Trägerelementes 2 ist entsprechend spiegelsymmetrisch ausgebildet und ebenfalls mit einem Einsatz 10 versehen.

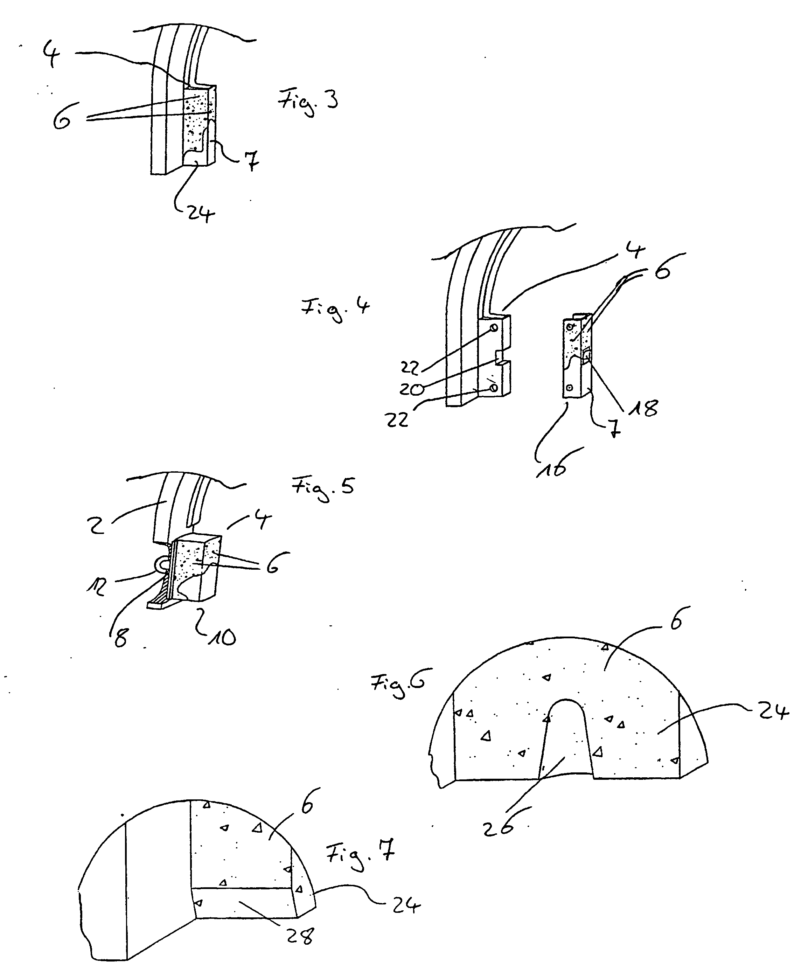

Die Fig. 3 bis 5 zeigen weitere Beispiele für die Anbringung einer Oberflächenschicht 6 aus Kohlenstoff, wie sie vorangehend beschrieben wurde.

Fig. 3 zeigt in einer Detailansicht einen Eingriffsabschnitt 4 einer Schaltgabel, wie sie beispielsweise in Fig. 1 gezeigt ist. In Fig. 3 ist eine erste bevorzugte Ausführungsform der Anbringung der Oberflächenschicht 6 gezeigt. In dem in Fig. 3 gezeigten Beispiel ist die Oberflächenschicht 6 aus Kohlenstoff, vorzugsweise Kohlenstoffpartikel, welche in Phenolharz eingebettet sind, an Vorder- und Rückseite sowie an der zur Mitte gerichteten Stirnseite 7 des Eingriffsabschnittes 4 aufgebracht. Die Beschichtung an der Stirnseite 7 ist optional und nicht unbedingt erforderlich. Das Aufbringen der Oberflächenschicht 6 aus Kohlenstoff erfolgt in der anhand von Fig. 1 beschriebenen Weise.

Fig. 4 zeigt eine weitere bevorzugte Ausführungsform des Eingriffsabschnittes 4. In dem in Fig. 4 gezeigten Beispiel ist die Oberflächenschicht 6 aus Kohlenstoff auf einen Einsatz 16 aufgebracht. Dabei ist die Oberflächenschicht 6 zumindest an Vorder- und Rückseite und optional ebenfalls an der Stirnseite 7 des Einsatzes 16 aufgebracht. Im Inneren des U-förmigen Einsatzes 16 ist ein Vorsprung 18 ausgebildet, welcher in eine korrespondierende Ausnehmung 20 an dem Eingriffsabschnitt 4 eingreift. Ferner sind in dem Eingriffsabschnitt gemäß Fig. 4 Löcher 22 ausgebildet, in welche korrespondierende Sicherungsstifte zur Befestigung des Einsatzes 16 eingreifen können.

Fig. 5 zeigt in einer Detailansicht den Eingriffsabschnitt 4 einer Ausführungsform ähnlich zu der anhand von Fig. 2 beschriebenen Ausführungsform. Gemäß dem Beispiel in Fig. 5 ist der Eingriffsabschnitt 4 als Einsatz 10 ausgebildet, welcher an Vorder- und Rückseite und vorzugsweise ebenfalls in der nach innen gerichteten Stirnseite mit einer Oberflächenschicht 6 aus Kohlenstoff versehen ist. Alternativ kann der Einsatz 10 vollständig aus dem Kohlenstoffmaterial gefertigt sein. Der Einsatz 10 ist drehbar bzw. schwenkbar in dem Trägerelement 2 gelagert. Dazu kann, wie anhand von Fig. 2 beschrieben, in dem Trägerelement 2 ein Durchgangsloch 8 vorgesehen sein, in welche der Einsatz 10 mit einem entsprechenden Bolzen eingesetzt ist und mit Hilfe eines Sicherungsringes 12 gesichert ist.

Fig. 6 und 7 zeigen spezielle Ausgestaltungen der vorderen Enden der Eingriffsabschnitte 4, wie sie anhand der Fig. 3 bis 5 beschrieben worden sind. Es handelt sich dabei um spezielle Ausgestaltungen des vorderen Endes 24 an der Vorderseite des Eingriffsabschnittes 4, wie beispielhaft in Fig. 3 eingezeichnet. Die Ausgestaltungen gemäß Fig. 6 und 7 lassen sich jedoch auch auf die Ausführungsbeispiele gemäß Fig. 4 und 5 anwenden. Gemäß dem Ausführungsbeispiel in Fig. 6 ist im Bereich des vorderen Endes 24 zentral eine daumenförmige Nut 26 in der Oberflächenschicht 6 des Eingriffsabschnittes 4 ausgebildet. Gemäß Fig. 7 weist die Oberflächenschicht 6 an ihrem vorderen Ende 24 eine Fase 28 auf. Die Nut 26 und die Fase 28 bewirken einen besseren Eingriff der Schaltgabel in korrespondierende Schaltmuffen und begünstigen den Aufbau eines hydrodynamischen Schmierfilms auf der Oberflächenschicht 6 durch Optimierung des Ölflusses.

### Bezugszeichenliste

- 2 -: Trägerelement
- 4 -: Eingriffsabschnitt
- 6 -: Oberflächenschicht
- 7: Stirnseite
- 8 -: Durchgangsloch
- 10 -: Einsatz
- 11 -: Kopf
- 12 -: Sicherungsring
- 14 -: Ringnut
- 16: Einsatz
- 18: Vorsprung
- 20: Ausnehmung
- 22: Löcher
- 24: vorderes Ende
- 26: Nut
- 28: Fase

## Patentansprüche

1. Schaltgabel, insbesondere für ein Kraftfahrzeuggetriebe, welche ein Trägerelement (2) aufweist, welches zumindest einen Gleitabschnitt (4) aufweist, der mit einer Oberflächenstruktur (6) versehen ist, welche Kohlenstoffpartikel in Form von Kohlenstaub, Russpartikeln oder petrolkoksbasierten Kohlenstoff enthält, welche in ein Harzmaterial eingebettet sind.

2. Schaltgabel nach Anspruch 1, bei welcher die Oberflächenstruktur als Oberflächenschicht (6) ausgebildet ist.

3. Schaltgabel nach Anspruch 2, bei welcher die Oberflächenschicht (6) mit dem Trägerelement (2) verklebt ist.

4. Schaltgabel nach Anspruch 2 oder 3, bei welcher zwischen dem Trägerelement (2) und der Oberflächenschicht (6) eine Verbindungsschicht, vorzugsweise aus einem Aramidgewebe, angeordnet ist.

5. Schaltgabel nach einem der vorangehenden Ansprüche, bei welcher die Kohlenstoffpartikel in Phenolharz eingebettet sind.

6. Schaltgabel nach einem der Ansprüche 1 bis 5, bei welcher der zumindest eine Gleitabschnitt (4) als Einsatz (10) ausgebildet ist, welcher mit dem Trägerelement (2), vorzugsweise lösbar, verbunden ist.

7. Schaltgabel nach Anspruch 6, bei welcher der Einsatz (10) vollständig aus einer Kohlenstoffstruktur ausgebildet ist, welche die Kohlenstoffpartikel aufweist, welche in das Harzmaterial eingebettet sind.

8. Schaltgabel nach einem der vorangehenden Ansprüche, bei welcher die Kohlenstoffstruktur oder die Oberflächenstruktur verdichtet ist.

## Claims

1. A gearshift fork, in particular for a motor vehicle gear, which comprises a carrier element (2) which comprises at least one sliding section (4) which is provided with a surface structure (6) which contains carbon particles in the form of coal dust, soot particles or carbon based on petroleum coke, which are embedded into a resin material.

2. A gearshift fork according to claim 1, with which the surface structure is formed as a surface layer (6).

3. A gearshift fork according to claim 2, with which the surface layer (6) is adhered to the carrier element (2).

4. A gearshift fork according to claim 2 or 3, with which a connecting layer, preferably of an aramide fabric, is arranged between the carrier element (2) and the surface layer (6).

5. A gearshift fork according to one of the preceding claims, with which the carbon particles are embedded into phenolic resin.

6. A gearshift form according to one of the claims 1 to 5, with which the at least one sliding section (4) is designed as an insert (10) which is connected, preferably detachably, to the carrier element (2).

7. A gearshift fork according to claim 6, with which the insert (10) is completely formed of a carbon structure which comprises the carbon particles which are embedded into the resin material.

8. A gearshift fork according to one of the preceding claims, with which the carbon structure or the surface structure are compacted.

## Revendications

1. Fourchette d'embrayage, en particulier pour une boîte de transmission de véhicules à moteur, qui présente un élément support (2), lequel présente au moins un segment glissant (4) qui est pourvu d'une structure de surface (6) qui contient des particules de carbone sous la forme de poussière de carbone, de particules de suie ou de carbone à base de coke de pétrole, qui sont noyées dans un matériau résineux.

2. Fourchette d'embrayage selon la revendication 1, dans laquelle la structure de surface se présente sous la forme d'une couche de surface (6).

3. Fourchette d'embrayage selon la revendication 2, dans laquelle la couche de surface (6) est collée à l'élément support (2).

4. Fourchette d'embrayage selon la revendication 2 ou 3, dans laquelle est aménagée, entre l'élément support (2) et la couche de surface (6), une couche de jonction, de préférence, en tissu d'aramide.

5. Fourchette d'embrayage selon l'une quelconque des revendications précédentes, dans laquelle les particules de carbone sont noyées dans une résine phénolique.

6. Fourchette d'embrayage selon l'une quelconque des revendications 1 à 5, dans laquelle le au moins un segment glissant (4) est aménagé sous la forme d'un insert (10), lequel est lié à l'élément support (2), de préférence, de manière amovible.

7. Fourchette d'embrayage selon la revendication 6, dans laquelle l'insert (10) est intégralement formé d'une structure de carbone qui présente des particules de carbone qui sont noyées dans le matériau résineux.

8. Fourchette d'embrayage selon l'une quelconque des revendications précédentes, dans laquelle la structure de carbone ou la structure de surface est densifiée.
